# EUROPEAN PATENT SPECIFICATION

(11) **EP 3 159 436 B1**
(45) Date of publication and mention of the grant of the patent: **20.11.2019**
(21) Application number: 15812104.6
(22) Date of filing: 16.06.2015
(51) Int. Cl.: C25D 5/14, C25D 3/60, B32B 15/01

(54) **ARTICLE HAVING MULTILAYER PLATING FILM**
ARTIKEL MIT MEHRSCHICHTIGER PLATTIERUNGSSCHICHT
OBJET PRÉSENTANT UN FILM MULTICOUCHE DE PLACAGE

(30) Priority: 23.06.2014 JP 2014128350; 10.12.2014 JP 2014249580
(43) Date of publication of application: 26.04.2017
(73) Proprietor: Okuno Chemical Industries Co., Ltd., Osaka-shi, Osaka 5410045 (JP)
(72) Inventor: NAGAO, Toshimitsu, Osaka-shi Osaka 5380044 (JP); TSUJIMOTO, Takamitsu, Osaka-shi Osaka 5380044 (JP); HARA, Kenji, Osaka-shi Osaka 5380044 (JP); KATAYAMA, Junichi, Osaka-shi Osaka 5380044 (JP); OTSUKA, Kuniaki, Osaka-shi Osaka 5380044 (JP)
(74) Representative: Müller-Boré & Partner Patentanwälte PartG mbB
(86) International application number: PCT/JP2015/067263
(87) International publication number: WO 2015/198914

(56) References cited:
- EP-A1- 1 006 215
- DE-A1-102006 054 761
- DE-B1- 2 141 940
- JP-A- 2000 219 995
- JP-A- 2001 348 679
- JP-A- 2002 508 453
- JP-A- 2014 500 404
- JP-B1- S4 931 413
- US-A1- 2014 127 532

## Description

### Technical Field

The present invention relates to a faucet fitting part comprising a multilayer plating film.

### Background Art

Currently, automobiles, home appliances, water faucet fittings, sundry articles, accessories, and like articles are plated with bright nickel having decorativeness and corrosion resistance. In general, after nickel plating is performed on an object to be plated (an article), chrome plating is performed as a finish plating. To further enhance corrosion resistance, multilayer (two-layer or three-layer) nickel plating is performed using nickel having different sulfur content (see Patent Literature (PTL) 1, Non-patent Literature (NPL) 1, etc.).

However, even a multilayer plating film formed by stacking two or more nickel plating layers and further having chrome plating thereon is insufficient in terms of corrosion resistance.

Patent Literature (PTL) 2 discloses a method for producing water-bearing components made of brass alloys such as fittings and the like, which have a reduced metal ion release in use, wherein a copper sulfide layer is formed at least on the surfaces of the components in contact with water.

### Citation List

### Patent Literature

PTL 1: JPH05-171468A
PTL 2: DE102006054761 A1

### Non-patent Literature

NPL 1: Electroplating & Chemical Plating Guide Book, edited by Tokyo Plating Material Cooperative Association, p. 156 (1987)

### Summary of Invention

### Technical Problem

The present invention has been made in view of the problems of the conventional techniques described above. A primary object of the invention is to provide a multilayer plating film with excellent corrosion resistance.

### Solution to Problem

The present inventors conducted extensive research to achieve the above object. As a result, the inventors found that when a specific tin-nickel plating solution is used, a tin-nickel plating film with high corrosion resistance is obtained and that when this tin-nickel plating film is disposed below a finish plating film (a chrome plating film), a multilayer plating film with excellent corrosion resistance is obtained. The present invention has been accomplished through further research based on these findings.

More specifically, the present invention provides an article comprising a multilayer plating film, wherein the article is a faucet fitting part and the multilayer plating film is formed on the faucet fitting part, wherein the multilayer plating film comprises at least a chrome plating film and a tin-nickel plating film, the chrome plating film being the outermost layer, and the tin-nickel plating film being formed below the chrome plating film by using an acidic tin-nickel alloy plating solution containing a divalent tin compound, a nickel compound, a triamine compound, and a fluoride, wherein the multilayer plating film is(1) a two-layer plating film obtained by directly forming a chrome plating film on a tin-nickel plating film,(2) a three-layer plating film obtained by forming a semi-bright nickel plating film, a tin-nickel plating film, and a chrome plating film in this order, or(6) a four-layer plating film obtained by forming a semi-bright nickel plating film, a bright nickel plating film, a tin-nickel plating film, and a chrome plating film in this order.

### Advantageous Effects of Invention

The multilayer plating film of the present invention comprises a highly corrosion-resistant tin-nickel plating film disposed below a chrome plating film, which is the outermost layer. Therefore, the multilayer plating film of the present invention has excellent corrosion resistance, compared with conventional multilayer films comprising a chrome plating film on a nickel plating film. Furthermore, the tin-nickel plating film used in the present invention has an excellent bright appearance as well as corrosion resistance. Therefore, when the multilayer plating film of the present disclosure is formed on the surface of an article, such as an automobile, a plated article with excellent decorativeness and corrosion resistance can be obtained. According to the invention, the article is a faucet fitting part and the corrosion resistance of the faucet fitting part is enhanced, which prevents elution of nickel from a nickel plating film deposited on the inside of the faucet fitting part, which has been a problem encountered when a nickel plating film and a chrome plating film are formed in this order on copper alloy parts.

### Brief Description of Drawings

Fig. 1 is a schematic diagram showing the multilayer plating film according to a first embodiment of the present invention.
Fig. 2 is a schematic diagram showing the multilayer plating film according to a second embodiment of the present invention.
Fig. 3 is a schematic diagram showing the multilayer plating film according to a third embodiment of the present invention.
Fig. 4 is a schematic diagram showing the multilayer plating film according to a fourth embodiment of the present invention.
Fig. 5 is a schematic diagram showing the multilayer plating film according to a fifth embodiment of the present invention.
Fig. 6 is a schematic diagram showing the multilayer plating film according to a sixth embodiment of the present invention.

### Description of Embodiments

The following describes in detail the multilayer plating film of the present invention.

The multilayer plating film of the present invention has the following features:
the multilayer plating film comprises at least a chrome plating film and a tin-nickel plating film;
the chrome plating film is the outermost layer;
the tin-nickel plating film is formed below the chrome plating film by using an acidic tin-nickel alloy plating solution comprising a bivalent tin compound, a nickel compound, a triamine compound, and a fluoride.

The tin-nickel plating film formed by using an acidic tin-nickel alloy plating solution containing a bivalent tin compound, a nickel compound, a triamine compound, and a fluoride has higher corrosion resistance than conventional bright nickel plating films. Therefore, when this tin-nickel plating film is formed and then a chrome plating film is formed as the outermost layer, a multilayer plating film with high corrosion resistance can be obtained. Furthermore, since the tin-nickel plating film formed by using the plating solution described above has an excellent bright appearance, the tin-nickel plating film can be used as an alternative for conventional bright nickel plating films.

In the multilayer plating film of the present disclosure, the tin-nickel plating film is disposed below a chrome plating film that is the outermost layer. For example, the chrome plating film can be formed directly on the tin-nickel plating film, or one or more other plating layers may be disposed between the tin-nickel plating film and the chrome plating film. According to the invention, the chrome plating film is formed directly on the tin-nickel plating film. The tin-nickel plating film can be directly formed on an object to be plated, or one or more other plating layers may be disposed between the object to be plated and the tin-nickel plating film.

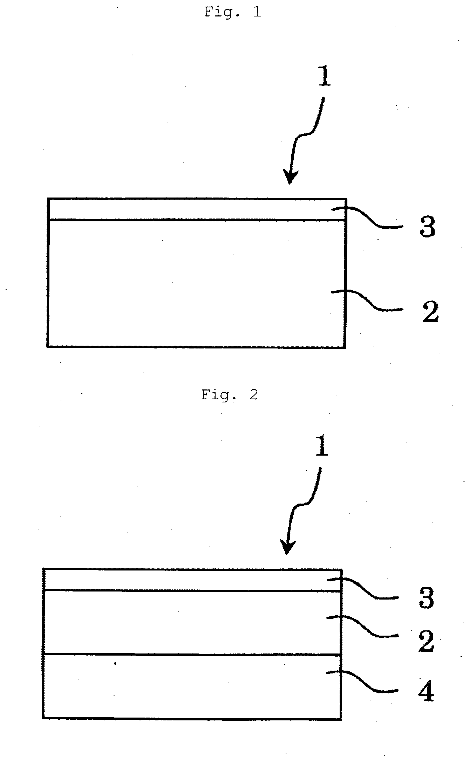

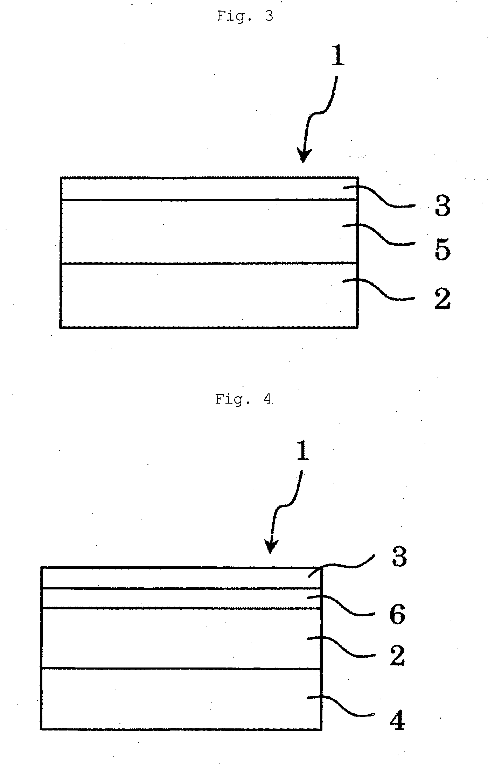

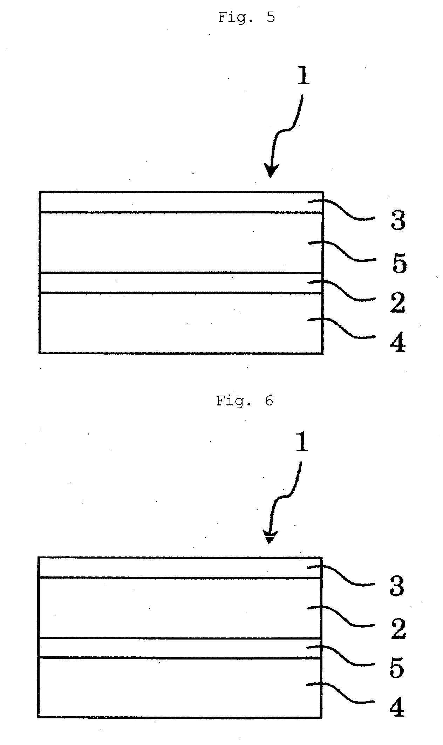

Examples of the multilayer plating film of the present disclosure include multilayer plating films shown in Figs. 1 to 6. Specific examples include
(1) a two-layer plating film obtained by directly forming a chrome plating film on a tin-nickel plating film (Fig. 1);
(2) a three-layer plating film obtained by forming a semi-bright nickel plating film, a tin-nickel plating film, and a chrome plating film in this order (Fig. 2);
(3) a three-layer plating film obtained by forming a tin-nickel plating film, a bright nickel plating film, and a chrome plating film in this order (Fig. 3);
(4) a four-layer plating film obtained by forming a semi-bright nickel plating film, a tin-nickel plating film, a nickel plating film for microporous chrome, and a chrome plating film in this order (Fig. 4);
(5) a four-layer plating film obtained by forming a semi-bright nickel plating film, a tin-nickel plating film, a bright nickel plating film, and a chrome plating film in this order (Fig. 5);
(6) a four-layer plating film obtained by forming a semi-bright nickel plating film, a bright nickel plating film, a tin-nickel plating film, and a chrome plating film in this order (Fig. 6); and the like. Among these multilayer plating films, (1) a two-layer plating film comprising a chrome plating film directly formed on a tin-nickel plating film is preferable because high corrosion resistance can be achieved with a simple structure.

According to the invention, the object to be plated is a faucet fitting part and a tin-nickel plating film is disposed immediately below a chrome plating film. That is, a chrome plating film is formed directly on the tin-nickel plating film. More specifically, the multilayer plating film formed on a faucet fitting part is one of the following multilayer films described above: (1) a two-layer plating film obtained by directly forming a chrome plating film on a tin-nickel plating film, (2) a three-layer plating film obtained by forming a semi-bright nickel plating film, a tin-nickel plating film, and a chrome plating film in this order, or (6) a four-layer plating film obtained by forming a semi-bright nickel plating film, a bright nickel plating film, a tin-nickel plating film, and a chrome plating film in this order.

The tin-nickel plating film can be formed by using an acidic tin-nickel alloy plating solution containing a bivalent tin compound and a nickel compound as metal sources, a triamine compound as a complexing agent, and a fluoride.

The bivalent tin compound contained in the plating solution may be any water-soluble compound containing bivalent tin as a tin component. Specific examples of bivalent tin compounds include stannous chloride, stannous sulfate, stannous acetate, stannous bromide, stannous iodide, stannous oxalate, stannous diphosphate, stannous ethylhexanoate, stannous sulfamate, and the like. These bivalent tin compounds can be usually used singly or in a combination of two or more. The concentration of the bivalent tin compound may be, for example, about 10 to 40 g/L in terms of the bivalent tin ion concentration.

Examples of nickel compounds include nickel chloride, nickel ammonium chloride, nickel sulfate, nickel ammonium sulfate, nickel potassium sulfate, nickel sulfamate, nickel acetate, nickel carbonate, nickel bromide, nickel acetylacetonate, nickel formate, nickel nitrate, nickel iodide, nickel oxalate, nickel stearate, nickel citrate, nickel hypophosphite, nickel phosphate, nickel tartrate, nickel lactate, and the like. These nickel compounds can be usually used singly or in a combination of two or more. The concentration of such a nickel compound may be, for example, about 30 to 150 g/L in terms of the nickel ion concentration.

A significant feature of the present invention is that a triamine compound is used as a complexing agent. Using a triamine compound can provide a metal coating film with a sufficiently bright appearance, which has been difficult to achieve with the fluoride bath used in conventional tin-nickel plating. Examples of triamine compounds include bis(hexamethylene)triamine, diethylenetriamine, diethylenetriaminepentaacetic acid, sodium diethylenetriaminepentaacetate, 1,2,3-benzenetriamine, melamine, and the like. The concentration of the triamine compound may be, for example, about 25 to 200 g/L.

Examples of fluorides include sodium fluoride, potassium fluoride, acidic ammonium fluoride, calcium fluoride, and the like. The concentration of fluoride may be, for example, about 20 to 100 g/L.

The plating solution usually has a pH in the range of about 3 to 6.

In the present invention, the plating conditions for performing tin-nickel plating are not particularly limited and can be appropriately selected according to the type of tin-nickel plating solution used.

For example, when the bath temperature during plating is low, throwing power increases but the film formation speed tends to decrease. Conversely, when the bath temperature is high, the film formation speed increases but throwing power onto low-current-density regions tends to decrease. Taking this point into consideration, an appropriate bath temperature can be determined. The bath temperature is preferably in the range of about 40 to 70°C.

The cathode current density can also be appropriately determined according to the plating solution used, type of object to be plated, etc. A cathode current density of about 0.1 to 10 A/dm² is preferable.

The anode may be any of a nickel plate alone, a combination of a nickel plate and a tin plate, a tin-nickel alloy plate, an insoluble anode, and the like. The cathode is an object to be plated, which will be described below.

The tin-nickel plating film deposited from the plating bath has a composition nearly at an atomic ratio of Sn:Ni = 1:1 (67 wt.% in terms of Sn amount) . In this case, the plating film contains tin and nickel in amounts such that the Sn content is in the range of 50 to 80 wt.% and the Ni content is in the range of 20 to 50 wt.%. The obtained tin-nickel plating film has excellent corrosion resistance. Even when the metal concentration ratio [= Sn/(Sn + Ni)] in the bath is changed to several times the original value, the obtained alloy layer is almost constant in terms of composition and bright state.

The corrosion resistance of the tin-nickel plating film does not depend on the thickness of the plating film. Excellent corrosion resistance is achieved even with a small plating film thickness. The tin-nickel plating film preferably has a film thickness equivalent to those of conventional nickel plating films. When the film thickness is 1 µm or more, higher corrosion resistance is provided. The film thickness is more preferably 3 µm or more.

The chrome plating film can be formed by conventionally used chrome plating methods.

The chrome plating solution may contain hexavalent chromium or trivalent chromium as a chromium component. Using trivalent chromium, which is less toxic, is preferable from the viewpoint of the work environment, wastewater treatment efficiency, etc. Trivalent chromium is also preferable from the viewpoint of salt damage resistance.

When trivalent chromium is used, the trivalent chrome plating solution comprises an aqueous solution containing a water-soluble trivalent chromium compound as a chromium component. There is no particular limitation on the composition of the trivalent chrome plating solution. In general, a trivalent chrome plating bath contains, in addition to a water-soluble trivalent chromium compound, a pH buffer in order to prevent the generation of chromium hydroxide, etc., due to a pH increase at the cathode reaction interface and further contains various additives, such as a complexing agent, a conductive salt, and a brightener. In the present invention, any trivalent chrome plating solution containing such various additives can be used.

Trivalent chrome plating is generally known to have lower purity than hexavalent chrome plating. As described above, the trivalent chrome plating solution contains large amounts of organic materials, such as a complexing agent and a brightener; therefore, organic materials containing carbon, sulfur, oxygen, etc. co-deposit in the chrome plating film. Accordingly, when a sulfur compound is added to the trivalent chrome plating solution to increase the amount of sulfur co-deposited in the plating film, a black appearance specific to trivalent chrome plating films can be obtained. The black appearance can also be obtained by adding metal oxide fine particles to a trivalent chrome plating bath and co-depositing the metal oxide fine particles in the plating film to increase the surface roughness of the plating film. In the present invention, as the trivalent chrome plating solution, a plating solution for forming a black plating film as described above can also be used.

The composition of the trivalent chrome plating film in the present invention is not particularly limited. The film may contain one or more metals other than chromium (e.g., iron, nickel, etc.), carbon, sulfur, oxygen, or metal oxides described above.

The water-soluble trivalent chromium compound contained in the trivalent chrome plating solution is any water-soluble compound containing trivalent chromium as a chromium component. Examples include chromium sulfate, chromium chloride, chromium nitrate, chromium acetate, and the like. These water-soluble trivalent chromic compounds can usually be used singly or as a mixture of two or more. The concentration of such a trivalent chromium compound may be, for example, about 1 to 50 g/L in terms of the trivalent chromium ion concentration.

Examples of pH buffers include boric acid, sodium borate, aluminum chloride, and the like. These pH buffers are usually added singly or as a mixture of two or more. The concentration of such a pH buffer may be, for example, about 10 to 100 g/L.

Examples of complexing agents include monocarboxylic acids, such as formic acid and acetic acid, and salts thereof; dicarboxylic acids, such as oxalic acid, malonic acid, and maleic acid, and salts thereof; and hydroxycarboxylic acids, such as citric acid, malic acid, and glycolic acid, and salts thereof. Examples of salts mentioned above include alkali metal salts, such as sodium salts and potassium salts; ammonium salts; and the like.

Examples of conductive salts include alkali metal salts, such as sodium sulfate, sodium chloride, sodium bromide, potassium sulfate, potassium chloride, and potassium bromide; ammonium salts, such as ammonium sulfate and ammonium chloride; and the like.

Examples of brighteners include saccharin, sodium saccharin, naphthalenesulfonic acid, sodium naphthalenesulfonate, butynediol, propargyl alcohol, and the like.

Examples of the sulfur compound added to a trivalent chrome plating solution for forming a trivalent chrome plating film with a black appearance include inorganic sulfur compounds and organic sulfur compounds. Examples of inorganic sulfur compounds include sodium sulfide, ammonium sulfide, calcium sulfide, potassium thiocyanate, sodium thiocyanate, sodium hydrogen sulfide, and the like. Examples of organic sulfur compounds include thiourea compounds, such as thiourea, allylthiourea, ethylenetiourea, diethylthiourea, diphenylthiourea, tolylthiourea, guanylthiouria, and acetylthiourea; mercapto compounds, such as 2-mercaptoethanol, 2-mercaptohypoxanthine, 2-mercaptobenzimidazole, and 2-mercaptobenzothiazole; amino compounds, such as aminothiazole; thiocarboxylic acids, such as thioformic acid, thioacetic acid, thiomalic acid, thioglycolic acid, thiodiglycolic acid, thiocarbamic acid, and thiosalicylic acid, and salts thereof; dithiocarboxylic acids, such as dithioformic acid, dithioacetic acid, dithioglycolic acid, dithiodiglycolic acid, and dithiocarbamic acid, and salts thereof.

Examples of metal oxide fine particles added to form irregularity on the plating film surface and thereby obtain a trivalent chrome plating film with a black appearance include silica compounds, such as nanocolloidal silica, silica gel, colloidal silica, and silica slurry; zirconium oxide, aluminum oxide, titanium oxide, magnesium oxide, tin oxide, copper oxide, zinc oxide, cerium oxide, yttrium oxide, iron oxide, cobalt oxide, and complex oxides thereof.

Such additives can usually be used singly or as a mixture of two or more. The concentrations of such additives are not particularly limited. For example, complexing agents may have a concentration of about 5 to 200 g/L, conductive salts may have a concentration of about 10 to 300 g/L, and brighteners may have a concentration of about 0.5 to 20 g/L. Each of the sulfur compound and metal oxide fine particles may have a concentration of about 0.1 to 100 g/L.

The pH of the trivalent chrome plating solution may be the same as the pH used during usual trivalent chrome plating treatment and is usually in the range of about pH 2 to 5.

There is no particular limitation on chrome plating conditions in the present invention. Conditions similar to usual plating conditions can be used according to the type of chrome plating solution used.

For example, when the bath temperature during plating is low, throwing power increases but the film production speed tends to decrease. Conversely, when the bath temperature is high, the film formation speed increases but throwing power onto a low-current-density region tends to decrease. Taking these points into consideration, an appropriate bath temperature can be determined. The bath temperature is preferably in the range of about 30 to 60°C.

The cathode current density can also be suitably determined according to the plating solution used, the type of object to be plated, etc. The cathode current density is preferably about 1 to 20 A/dm².

When the chrome plating film formed is a single layer, either a trivalent chrome plating film or a hexavalent chrome plating film can be formed. From the viewpoint of the work environment, wastewater treatment efficiency, salt damage resistance, etc., a trivalent chrome plating film is preferable. To further improve corrosion resistance, the chrome plating film may have a two-layer structure obtained by forming a hexavalent chrome plating film formed on a trivalent chrome plating film. When a higher corrosion resistance is necessary, the surface of the trivalent chrome plating film may be subjected to either electrolytic chromate treatment or immersion chromate treatment, or both.

The multilayer plating film described above is formed on the surface of an article to be plated. The article to be plated is not particularly limited as long as the surface is electrically conductive and is flat. Examples of such articles include automobiles, home appliances, faucet fittings, sundry articles, and accessories. According to the invention, the article is a faucet fitting part.

The semi-bright nickel plating film, bright nickel plating film, and nickel plating film for microporous chrome, which are formed in the multilayer plating films (2) to (6), can be produced by conventional plating methods for decoratively plating articles such as automobile parts.

For example, a semi-bright nickel plating film can be obtained by plating with a nickel plating solution adjusted to a sulfur deposition amount of less than 0.005%. A bright nickel plating film can be obtained by plating with a nickel plating solution adjusted to a sulfur deposition amount of about 0.05%. The nickel plating film for microporous chrome can be obtained by performing non-conductive fine particle eutectoid nickel plating in a nickel plating bath containing non-conductive fine particles, such as SiO₂ and TiO₂, in a dispersed or suspended state.

Since articles having the multilayer plating film of the present invention have a tin-nickel plating film with excellent corrosion resistance and bright appearance formed below a chrome plating film, the articles can be used as plated objects having decorativeness and corrosion resistance.

According to the invention, the article is a faucet fitting part. Corrosion resistance of the faucet fitting part is improved and elution of nickel from a nickel plating film deposited inside of the faucet fitting part, which is a problem in conventional faucet fitting parts, can be prevented. More specifically, a nickel plating film and a chrome plating film are conventionally formed in this order on a faucet fitting part made of a copper alloy (a copper plating film). Because the throwing power is different depending on the type of plating, a nickel plating film is formed even on the inside of the faucet fitting part, whereas a chrome plating film is not formed on the inside of the part. Therefore, the nickel plating film corrodes due to cold or hot water running inside the faucet fitting part, resulting in nickel elution, which has been a problem. The above problem can be solved by forming the multilayer plating film of the present invention on faucet fitting parts. In this multilayer plating film, a tin-nickel plating film is disposed immediately below a chrome plating film. That is, a chrome plating film is preferably formed directly on a tin-nickel plating film. Among the multilayer plating films (1) to (6) described above, one of the following multilayer plating films is used : (1) a two-layer plating film obtained by directly forming a chrome plating film on a tin-nickel plating film, (2) a three-layer plating film obtained by forming a semi-bright nickel plating film, a tin-nickel plating film, and a chrome plating film in this order, or (6) a four-layer plating film obtained by forming a semi-bright nickel plating film, a bright nickel plating film, a tin-nickel plating film, and a chrome plating film in this order.

### Examples

The present invention is described below in more detail with reference to Examples.

In the Examples and Comparative Examples below, plating was performed under the same conditions, which are as described below.

Test substrate: brass plate (50 x 100 mm)
Copper sulfate plating bath:

| | |
|---|---|
| Copper sulfate (CuSO₄•5H₂O) | 200 g/L |
| Sulfuric acid (H₂SO₄) | 50 g/L |
| Chloride ions | 50 mg/L |
| Top Lutina 2000 MU* | 5 mL/L |
| Top Lutina 2000 A* | 0.5 mL/L |
| Bath temperature | 22°C |
| Current density | 3 A/dm² |

Semi-bright nickel plating bath:

| | |
|---|---|
| Nickel sulfate (NiSO₄•6H₂O) | 300 g/L |
| Nickel chloride (NiCl₂•6H₂O) | 45 g/L |
| Boric acid (H₃BO₃) | 45 g/L |
| Acna NEO-M* | 4 mL/L |
| Acna NEO-S* | 3 mL/L |
| Acna H* | 2 mL/L |
| pH | 4.2 |
| Bath temperature | 52°C |
| Current density | 3 A/dm² |

Bright nickel plating bath:

| | |
|---|---|
| Nickel sulfate (NiSO₄•6H₂O) | 280 g/L |
| Nickel chloride (NiCl₂•6H₂O) | 45 g/L |
| Boric acid (H₃BO₃) | 40 g/L |
| Improved Acna B-1* | 20 mL/L |
| Improved Acna B-2* | 1 mL/L |
| pH | 4.2 |
| Bath temperature | 50°C |
| Current density | 3 A/dm² |

Nickel plating bath for microporous chrome:

| | |
|---|---|
| Nickel sulfate (NiSO₄•6H₂O) | 280 g/L |
| Nickel chloride (NiCl₂•6H₂O) | 45 g/L |
| Boric acid (H₃BO₃) | 40 g/L |
| Seal nickel HCR-K-1* | 5 mL/L |
| Seal nickel HCR-K-2* | 2 mL/L |
| Seal nickel HCR-K-303* | 0.5 g/L |
| Seal nickel HCR-K-4* | 0.5 mL/L |
| SMPC-4* | 0.15 g/L |
| pH | 4.6 |
| Bath temperature | 55°C |
| Current density | 3 A/dm² |

Tin-nickel plating bath:

| | |
|---|---|
| Stannous chloride (SnCl₂•2H₂O) | 50 g/L |
| Nickel chloride (NiCl₂•6H₂O) | 300 g/L |
| Acidic ammonium fluoride | 60 g/L |
| Diethylenetriamine | 100 g/L |
| pH | 4.9 |
| Bath temperature | 55°C |
| Current density | 2 A/dm² |

Trivalent chrome plating bath:

| | |
|---|---|
| Top Fine Chrome WR Conc.* | 300 mL/L |
| Top Fine Chrome WR-C1* | 140 g/L |
| Top Fine Chrome WR-C2* | 100 g/L |
| Top Fine Chrome WR-B* | 35 g/L |
| Sodium hydroxide (NaOH) | 35 g/L |
| pH | 2.5 |
| Bath temperature | 30°C |
| Current density | 12 A/dm² |

Black trivalent chrome plating bath:

| | |
|---|---|
| Top Fine Chrome FMB Conc.* | 70 mL/L |
| Top Fine Chrome FMB-S1* | 160 g/L |
| Top Fine Chrome FMB-S2* | 50 g/L |
| Top Fine Chrome FMB-KM* | 6 mL/L |
| Anti-mist agent W40* | 2 mL/L |
| pH | 3.4 |
| Bath temperature | 50°C |
| Current density | 8 A/dm² |

Hexavalent chrome plating bath:

| | |
|---|---|
| Chromic acid (CrO₃) | 300 g/L |
| Sulfuric acid (H₂SO₄) | 2.5 g/L |
| Trivalent chromium (Cr³⁺) | 1 g/L |
| Bath temperature | 40°C |
| Current density | 15 A/dm² |

In the above plating bath compositions, the components marked with "*" are products manufactured by Okuno Chemical Industries Co., Ltd.

### Test Example 1 (CASS test)

Brass plates (50 x 100 mm) as test pieces were treated under various conditions using the aforementioned plating baths to form plating films having the compositions of Examples 1 to 18 and Comparative Examples 1 to 6 described below. Each of the obtained test samples was evaluated for corrosion resistance in accordance with the CASS test method defined in JIS H 8502 (*Methods of the corrosion resistance test for metallic coatings*) to evaluate the occurrence of copper rust. Tables 1 to 3 show the compositions and film thickness of the plating films obtained in Examples 1 to 18 and Comparative Examples 1 to 6 as well as the CASS test results of the plating films. Examples 3 to 5, 9 to 11 and 15 to 17 are reference examples wherein the chrome plating film is not directly formed on the tin-nickel plating film.

**Table 1**

| | Example 1 | Example 2 | Example 3 | Example 4 | Example 5 | Example 6 | Comparative Example 1 | Comparative Example 2 |
|---|---|---|---|---|---|---|---|---|
| Plating film | Cr³⁺ plating (0.2 µm) | Cr³⁺ plating (0.2 µm) | Cr³⁺ plating (0.2 µm) | Cr³⁺ plating (0.2 µm) | Cr³⁺ plating (0.2 µm) | Cr³⁺ plating (0.2 µm) | Cr³⁺ plating (0.2 µm) | Cr³⁺ plating (0.2 µm) |
| | Sn-Ni plating (12.5 µm) | Sn-Ni plating (12.5 µm) | Bright Ni plating (12.5 µm) | Bright Ni plating (6 µm) | Bright Ni plating (10 µm) | Sn-Ni plating (2 µm) | Bright Ni plating (12.5 µm) | Bright Ni plating (12.5 µm) |
| | Copper Plating (25 µm) | Semi-bright Ni plating (12.5 µm) | Sn-Ni plating (12.5 µm) | Sn-Ni plating (6 µm) | Sn-Ni Plating (2 µm) | Bright Ni plating (10 µm) | Copper plating (25 µm) | Semi-bright Ni plating (12.5 µm) |
| | | Copper plating (25 µm) | Copper plating (25 µm) | Semi-bright Ni plating (12.5 µm) | Semi-bright Ni plating (12.5 µm) | Semi-bright Ni plating | | Copper-plating (25 µm) |
| | | | | Copper-plating (25 µm) | Copper-plating (25 µm) | Copper-plating (25 µm) | | |
| 80-hour CASS test | No corrosion | No corrosion | Corrosion pits (no copper rust) | Corrosion pits (no copper rust) | Corrosion pits (no copper rust) | No corrosion | Corrosion pits (severe copper rust) | Corrosion pits (severe copper rust) |

**Table 2**

| | Example 7 | Example 8 | Example 9 | Example 10 | Example 11 | Example 12 | Comparative Example 3 | Comparative Example 4 |
|---|---|---|---|---|---|---|---|---|
| Plating Film | Cr⁶⁺ plating (0.2 µm) | Cr⁶⁺ plating (0.2 µm) | Cr⁶⁺ plating (0.2 µm) | Cr⁶⁺ plating (0.2 µm) | Cr⁶⁺ Plating (0.2 µm) | Cr⁶⁺ plating (0.2 µm) | Cr⁶⁺ plating (0.2 µm) | Cr⁶⁺ plating (0.2 µm) |
| | Sn-Ni plating (12.5 µm) | Sn-Ni plating (12.5 µm) | Bright Ni plating (12.5 µm) | Bright Ni plating (6 µm) | Bright Ni Plating (10 µm) | Sn-Ni plating (2 µm) | Bright Ni plating µm) | Bright Ni plating (12.5 µm) |
| | Copper plating (25 µm) | Semi-bright Ni-plating (12.5 µm) | Sn-Ni-plating (12.5 µm) | Sn-Ni plating (6 µm) | Sn-Ni plating (2 µm) | Bright Ni plating (10 µm) | Copper plating (25 µm) | Semi-bright Ni plating (12.5 µm) |
| | | Copper plating (25 µm) | Copper plating (25 µm) | Semi-bright Ni plating (12.5 µm) | Semi-bright Ni plating (12.5 µm) | Semi-bright Ni plating (12.5 µm) | | Copper plating 25 µm) |
| | | | | Copper plating (25 µm) | Copper plating (25 µm) | Copper plating (25 µm) | | |
| 80-hour CASS test | No corrosion | No corrosion | Corrosion pits (No copper rust) | Corrosion pits (No copper rust) | Corrosion pits (No copper rust) | No corrosion | Corrosion pits (Severe copper rust) | Corrosion pits (Severe copper rust) |

**Table 3**

| | Example 13 | Example 14 | Example 15 | Example 16 | Example 17 | Example 18 | Comparative Example 5 | Comparative Example 6 |
|---|---|---|---|---|---|---|---|---|
| Plating film | Black Cr³⁺ plating (0.2 µm) | Black Cr³⁺ plating (0.2 µm) | Black Cr³⁺ plating (0.2 µm) | Black Cr³⁺ plating (0.2 µm) | Black Cr³⁺ plating (0.2 µm) | Black Cr³⁺ plating (0.2 µm) | Black Cr³⁺ plating (0.2 µm) | Black Cr³⁺ plating (0.2 µm) |
| | Sn-Ni Plating (12.5 µm) | Sn-Ni Plating (12.5 µm) | Bright Ni plating (12.5 µm) | Bright Ni plating (6 µm) | Bright Ni plating (10 µm) | Sn-Ni plating (2 µm) | Bright Ni plating (12.5 µm) | Bright Ni plating (12.5 µm) |
| | Copper Plating (25 µm) | Semi-Bright Ni plating (12.5 µm) | Sn-Ni plating (12.5 µm) | Sn-Ni plating (6 µm) | Sn-Ni plating (2 µm) | Bright Ni plating (10 µm) | Copper plating (25 µm) | Semi-Bright Ni plating (12.5 µm) |
| | | Copper plating (25 µm) | Copper plating (25 µm) | Semi-bright Ni plating (12.5 µm) | Semi-bright Ni plating (12.5 µm) | Semi-bright Ni plating (12.5 µm) | | Copper Plating (25 pm) |
| | | | | Copper plating (25 µm) | Copper plating (25 µm) | Copper plating (25 µm) | | |
| 80-hour CASS test | No corrosion | No corrosion | Corrosion pits (No copper rust) | Corrosion pits (No copper rust) | Corrosion pits (No copper rust) | No corrosion | Corrosion pits (Severe copper rust) | Corrosion pits (Severe copper rust) |

Even after an 80-hour CASS test, no copper rust occurred in Examples 1 to 18 in which a tin-nickel plating film was formed below a chrome plating film, whereas severe copper rust occurred in Comparative Examples 1 to 6 in which a nickel plating film was formed below a chrome plating film and the multilayer plating film did not comprise a tin-nickel plating film. These results show that corrosion resistance is improved by forming a tin-nickel plating film below a chrome plating film.

### Test Example 2 (Artificial sweat test)

Plating films having the compositions of Examples 19 to 26 and Comparative Examples 7 to 10 shown below were formed by treating brass plates (2.5 x 2.5 cm) as test pieces under various conditions using the aforementioned plating baths. Each of the obtained samples was immersed in 100 mL of artificial sweat (acidic and alkaline) at 40°C for 24 hours. The detailed conditions are as follows.

**Table 4**

| Test piece | Brass plates 2.5 × 2.5 cm |
|---|---|
| Artificial sweat | ■ Artificial sweat (acidic) pH 5.5: JIS L-0848-1978 (Method A) |
| | ■ Artificial sweat (alkaline) pH 8.0: JIS L-0848-1978 (Method A) |
| Artificial sweat volume | 100 mL |
| Sweat temperature | 40°C |
| Immersion time | 24 hours |

After 24 hours of immersion, the plating appearance was visually evaluated and the amounts of Ni, Sn, Cu, and Zn eluted were measured by ICP emission spectrometry. Tables 5 and 6 show the compositions and evaluation conditions of the plating films obtained in Examples 19 to 26 and Comparative Examples 7 to 10 as well as the plating appearance and artificial sweat test results.

**Table 5**

| | Example 19 | Example 20 | Example 21 | Example 22 | Comparative Example 7 | Comparative Example 8 |
|---|---|---|---|---|---|---|
| Plating film | Sn-Ni plating (1 µm) | Sn-Ni plating (5 µm) | Sn-Ni plating (1 µm) | Sn-Ni plating (5 µm) | Bright Ni plating (1 µm) | Bright Ni plating (5 µm) |
| | | | Bright Ni plating (5 µm) | Bright Ni plating (5 µm) | | |
| Artificial sweat | Acidic | Acidic | Acidic | Acidic | Acidic | Acidic |
| Plating appearance | No change | No change | No change | No change | Ni plating dissolution, brass color | Ni plating dissolution, brass color |
| Amount of Ni eluted | 0 mg | 0 mg | 0 mg | 0 mg | 7.277 mg | 7.321 mg |
| Amount of Sn eluted | 0 mg | 0 mg | 0 mg | 0 mg | - | - |
| Amount of Cu eluted | 0 mg | 0 mg | 0 mg | 0 mg | 0 mg | 0 mg |
| Amount of Zn eluted | 0 mg | 0 mg | 0 mg | 0 mg | 0.034 mg | 0.034 mg |

**Table 6**

| | Example 23 | Example 24 | Example 25 | Example 26 | Comparative Example 9 | Comparative Example 10 |
|---|---|---|---|---|---|---|
| Plating film | Sn-Ni plating (1 µm) | Sn-Ni plating (5 µm) | Sn-Ni plating (1 µm ) | Sn-Ni plating (5 µm) | Bright Ni plating (1 µm) | Bright Ni plating (5 µm) |
| | | | Bright Ni plating (5 µm) | Bright Ni plating (5 µm) | | |
| Artificial sweat | Alkaline | Alkaline | Alkaline | Alkaline | Alkaline | Alkaline |
| Plating appearance | No change | No change | No change | No change | Ni plating dissolution, brown color | Ni plating dissolution, light brown color |
| Amount of Ni eluted | 0 mg | 0 mg | 0 mg | 0 mg | 5.876 mg | 6.123 mg |
| Amount of Sn eluted | 0 mg | 0 mg | 0 mg | 0 mg | - | - |
| Amount of Cu eluted | 0 mg | 0 mg | 0 mg | 0 mg | 0.025 mg | 0 mg |
| Amount of Zn eluted | 0 mg | 0 mg | 0 mg | 0 mg | 0.032 mg | 0.021 mg |

In Examples 19 to 26 in which a tin-nickel plating film was formed as the outermost layer, nickel was not eluted even after immersion in artificial sweat for 24 hours, and no change in plating appearance was observed before and after the immersion. In contrast, among Comparative Examples 7 to 10 in which a nickel plating film was formed as the outermost layer and no tin-nickel plating film was formed, nickel and zinc were detected after immersion in the artificial sweat for 24 hours in Comparative Examples 7, 8, and 10, whereas nickel, zinc, and copper were detected in Comparative Example 9. It was visually confirmed that the plating appearance of Comparative Examples 7 to 10 changed from a silver gray color of the nickel plating films to a brass or brown color after the artificial sweat test. This shows that the nickel films were dissolved by artificial sweat, and brass used as a base material was also corroded and dissolved. These results show that the elution of nickel can be prevented by forming a tin-nickel plating film in place of a nickel plating film, or forming a tin-nickel plating film on a nickel plating film.

### Description of the Reference Numerals

- 1: Multilayer plating film
- 2: Tin-nickel plating film
- 3: Chrome plating film
- 4: Semi-bright nickel plating film
- 5: Bright nickel plating film
- 6: Nickel plating film for microporous chrome

## Claims

1. An article comprising a multilayer plating film, wherein the article is a faucet fitting part and the multilayer plating film is formed on the faucet fitting part, wherein the multilayer plating film comprises at least a chrome plating film and a tin-nickel plating film,
the chrome plating film being the outermost layer, and
the tin-nickel plating film being formed below the chrome plating film by using an acidic tin-nickel alloy plating solution containing a divalent tin compound, a nickel compound, a triamine compound, and a fluoride,
wherein the multilayer plating film is
(1) a two-layer plating film obtained by directly forming a chrome plating film on a tin-nickel plating film,
(2) a three-layer plating film obtained by forming a semi-bright nickel plating film, a tin-nickel plating film, and a chrome plating film in this order, or
(6) a four-layer plating film obtained by forming a semi-bright nickel plating film, a bright nickel plating film, a tin-nickel plating film, and a chrome plating film in this order.

## Patentansprüche

1. Gegenstand, umfassend einen mehrschichtigen Plattierungsfilm, wobei der Gegenstand ein Wasserhahnbeschlagteil ist und der mehrschichtige Plattierungsfilm auf dem Wasserhahnbeschlagteil gebildet ist, wobei der mehrschichtige Plattierungsfilm mindestens einen Chromplattierungsfilm und einen Zinn-Nickel-Plattierungsfilm umfasst,
der Chromplattierungsfilm die äußerste Schicht ist und
der Zinn-Nickel-Plattierungsfilm unter Verwendung einer sauren Zinn-Nickel-Legierung-Plattierungslösung, die eine zweiwertige Zinnverbindung, eine Nickelverbindung, eine Triaminverbindung und ein Fluorid enthält, unter dem Chromplattierungsfilm gebildet ist, wobei der mehrschichtige Plattierungsfilm
(1) einzweischichtiger Plattierungsfilm, erhalten durch das direkte Bilden eines Chromplattierungsfilms auf einem Zinn-Nickel-Plattierungsfilm,
(2) ein dreischichtiger Plattierungsfilm, erhalten durch das Bilden eines halbglänzenden Nickelplattierungsfilms, eines Zinn-Nickel-Plattierungsfilms und eines Chromplattierungsfilms in dieser Reihenfolge, oder
(6) ein vierschichtiger Plattierungsfilm, erhalten durch das Bilden eines halbglänzenden Nickelplattierungsfilms, eines glänzenden Nickelplattierungsfilms, eines Zinn-Nickel-Plattierungsfilms und eines Chromplattierungsfilms in dieser Reihenfolge,
ist.

## Revendications

1. Article comprenant un film multicouche de placage, dans lequel l'article est une partie d'ajustement de robinet et le film multicouche de placage est formé sur la partie d'ajustement de robinet, dans lequel le film multicouche de placage comprend au moins un film de placage de chrome et un film de placage d'étain et de nickel,
le film de placage de chrome étant la couche la plus extérieure, et le film de placage d'étain et de nickel étant formé en dessous du film de placage de chrome en utilisant une solution de placage d'alliage d'étain et de nickel acide contenant un composé d'étain divalent, un composé de nickel, un composé de triamine, et un fluorure,
dans lequel le film multicouche de placage est
(1) un film de placage à deux couches obtenu en formant directement un film de placage de chrome sur un film de placage d'étain et de nickel,
(2) un film de placage à trois couches obtenu en formant un film de placage de nickel semi-brillant, un film de placage d'étain et de nickel, et un film de placage de chrome dans cet ordre, ou
(6) un film de placage à quatre couches obtenu en formant un film de placage de nickel semi-brillant, un film de placage de nickel brillant, un film de placage d'étain et de nickel, et un film de placage de chrome dans cet ordre.
